# EUROPEAN PATENT SPECIFICATION

(11) **EP 4 310 454 B1**
(45) Date of publication and mention of the grant of the patent: **03.09.2025**
(21) Application number: 22186145.3
(22) Date of filing: 21.07.2022
(51) Int. Cl.: G01C 25/00

(54) **ROTATION RATE OFFSET COMPENSATION**
DREHRATENVERSATZKOMPENSATION
COMPENSATION DE DÉCALAGE DE VITESSE DE ROTATION

(43) Date of publication of application: 24.01.2024
(73) Proprietor: Veoneer Sweden Safety Systems AB, 10302 Stockholm (SE)
(72) Inventor: BEN SAID, Hela, 95800 Cergy-Pontoise (FR); LOISY, Aurore, 95800 Cergy-Pontoise (FR); LEMERRER, Yann, 95800 Cergy-Pontoise (FR); DEVAVRY, Arnaud, 95800 Cergy-Pontoise (FR)
(74) Representative: Reichert & Lindner Partnerschaft Patentanwälte

(56) References cited:
- DE-A1- 102008 041 451
- US-A- 5 297 028
- US-B1- 6 738 721

## Description

The invention refers to the compensation of an offset of a rotation rate sensor on board of a vehicle.

In the automotive industry there is an increasing trend towards vehicle autonomy, which concept includes both fully autonomous vehicles and vehicles with the capability of performing some driving functions autonomously, like emergency braking or adaptive cruise control. Regardless of whether a vehicle is fully or partially autonomous, driving functions require precise information not only on the vehicle's position but also on the vehicle's state of motion, defined by the velocity of the vehicle's centre of mass and the rotation of the vehicle, e.g., about each of three orthogonal axes through the centre of mass. Rotation can be determined by a rotation rate sensor, which is often part of a larger sensor system like an Inertial Measurement Unit (IMU). This is an electronic sensor (or group of sensors) measuring acceleration, rate of rotation, and in some cases also orientation of the vehicle. An IMU is used for example in so-called Advanced Driver Assistance Systems (ADAS) or also with Restraint Control Systems (RCS). It is evident that for these applications the sensor output has to be reliably precise and remain so over time.

The published German patent application DE 10 2008 041 451 A1 relates to the calibration of a measurement device, in particular of a rotation rate sensor, in a vehicle. Offsets for measured rotation rates are obtained from a table, in which the offsets are stored in dependence on temperature and uptime of the rotation sensor. Also stored is a statistical error of each offset. The table may be updated if the vehicle is at rest. The updated value of an offset for a particular temperature and uptime is a weighted average of the current value of the offset and a newly measured rotation rate, where the weights are given by the statistical errors of the new rotation rate and of the stored offset, respectively. The statistical error of a stored offset may be increased with time passed since the last update.

US patent US 5 297 028 discloses temperature-dependent correction of a measured rotation rate of a vehicle with an offset from a table. In the table, offset values are stored associated with temperature values. The table may be updated at vehicle rest.

US patent US 6 738 721 B1 describes a method according to which an inertial measurement system is first gauged overall in a testing device in one calibration operation. Resulting compensation values are used to improve the accuracy of the system in operation.

It is known to compensate an offset in rotation rate of the rotation rate sensor either at the beginning of a cruise while the vehicle is still at rest or during a cruise. There are issues with both known approaches. During a cruise, the offset estimation tends to become faulty with increasing duration of the cruise. A determination of the offset at the beginning of a cruise cannot address influences on the offset which only show up later during the cruise; in fact, it turns out that temperature is a major influence here, and temperature will usually change during a cruise.

A further effect on sensor performance is the age of a sensor. Additionally, an estimate of a remaining error after an offset compensation would be desirable.

Therefore, it is an object of the invention to provide a method for offset compensation of a rotation rate sensor on board of a vehicle which addresses at least some of the aforementioned problems. This object is achieved by a method according to claim 1. Claim 11 relates to a corresponding system and claim 12 to a corresponding vehicle.

The method according to the invention is for the compensation of an offset of a rotation rate sensor on board of a vehicle. According to the method, a rotation rate of the vehicle is measured with the rotation rate sensor. This measured rotation rate is corrected by subtracting an offset from the measured rotation rate, and the rotation rate thus corrected is subsequently output.

The offset is provided from a table associating temperature values with offset values. A temperature for the rotation rate sensor is determined and from the table the offset value associated with the determined temperature is used for correcting the measured rotation rate.

In this way, in compensating the offset of the rotation rate sensor the temperature dependence of the offset is taken into account. The compensation of the offset therefore is more accurate.

It should be noted here that the measuring of the rotation rate with the rotation rate sensor may be accomplished by reading out a single rotation rate value from the rotation rate sensor, which rotation rate value subsequently is corrected as just described. Alternatively, the measuring of the rotation rate with the rotation rate sensor may include reading out a plurality of rotation rate values, averaging over the plurality of rotation rate values and using the resulting average as the measured rotation rate, which subsequently is corrected as described above. In either case, reading out one or plural rotation rate values may include a filtering of raw sensor output, for example by a low pass filter. Any other known way of obtaining a rotation rate reading from the rotation rate sensor may also be suitable. The determining of a temperature for the rotation rate sensor can be accomplished by any means known in the art, and may, for example, include measuring a temperature of the rotation rate sensor with a temperature sensor, but may for example also include measuring one or plural temperature values in a vicinity of the rotation rate sensor and inferring the temperature for the rotation rate sensor therefrom. For example, a temperature for the rotation rate sensor may be derived via some model from the one or plural temperature values measured in a vicinity of the rotation rate sensor; alternatively, the one temperature value or an average over the plural temperature values measured in a vicinity of the rotation rate sensor may be taken as the temperature for the rotation rate sensor for purposes of the invention. Outputting the corrected rotation rate may include providing the corrected rotation rate to other systems and/or functions of the vehicle and may also include displaying the corrected rotation rate to a user, like a driver.

The table is updated via the following steps: It is determined whether or not the vehicle is at rest. The reason is that at rest the actual rotation rate is zero. Determining a rotation rate from the rotation rate sensor then provides an offset of the rotation rate sensor. More precisely, if it is determined that the vehicle is at rest, a temperature for the rotation rate sensor is determined, and a rotation rate is determined from the rotation rate sensor. Determining the temperature can be accomplished as has already been discussed above for the case of providing an offset for correcting a measured rotation rate. Determining the rotation rate may include reading out a single rotation rate value from the rotation rate sensor or may include reading out a plurality of rotation rate values and taking the average of the plurality of rotation rate values as the determined rotation rate. Reading out one or plural rotation rate values may include a filtering of raw sensor output, for example by a low pass filter. Subsequently, the table is updated with the temperature and associated offset. Determining this offset associated with the temperature involves the determined rotation rate.

In order to determine whether the vehicle is at rest, various methods can be applied. For example, signals from various sensors, available, e.g., via a vehicle bus, may be evaluated. These signals may include, without being limited thereto, signals indicative of a speed of the vehicle, an acceleration of the vehicle, rotation of the vehicle, position of the brake pedal, position of the throttle pedal, the state of the reverse gear, the locking state of the steering wheel, on/off-state of the vehicle engine. Speed, acceleration, rotation or the change thereof, available via these signals may be compared to thresholds in order to determine vehicle rest.

In an example not part of the claimed invention, the determined rotation rate is used as the offset for the respective temperature. In a different example not part of the claimed invention, the offset for the respective temperature is determined by an averaging procedure of rotation rates determined previously for the respective temperature at vehicle rest and the currently determined rotation rate at vehicle rest. To this end, previously determined rotation rates may be stored associated with the respective temperature; for example, a certain number of previously determined rotation rates, like five, ten, or twenty, may be stored for a respective temperature. In a specific variant of this example, the averaging procedure of rotation rates is a weighted average of rotation rates, with the weight of a rotation rate decreasing with increasing age of the rotation rate. To this end, upon updating the table, along with the temperature for the rotation rate sensor and the rotation rate determined at the update, the date of the update is stored, so that the age of the respective rotation rate can be inferred for purposes of weighting. As an alternative variant, instead of storing the date of an update and deriving a weight therefrom, a weight can be stored along with the rotation rate determined at the update. The weight is decreased in dependence on time.

In the method according to the invention, the offset for a specific temperature in the table is updated as follows: The new, updated value of the offset for the specific temperature is a weighted average of the previous offset in the table for this specific temperature, i.e., the offset before the update, and the currently determined rotation rate at vehicle rest for this temperature. The weight of the previous offset in the table is the lower the older it is, i.e., the longer in the past it was calculated. In a variant outside the scope of the invention, the date of the latest update is stored along with the offset. According to the invention, instead of storing the date of the latest update, a weight for the updated offset is stored, and the weight is decreased over time. At the next update, the weight for the offset in the table is directly available as a stored value and need not be derived from the date of the previous update.

More precisely, according to the invention, upon update the updated offset receives a pre-defined initial weight, expressed by a value of a counter. The counter is decreased by one at fixed time intervals. The weight of the currently determined rotation rate in the weighted average is equal to the pre-defined initial weight.

In an embodiment, an update for the table at a specific temperature is only performed if a pre-defined minimum amount of time has passed since the last update for that specific temperature.

Through the updating of the table described above the ageing of the rotation rate sensor is taken into account. The offsets stored in the table for the various embodiments thus may change over the course of time as the rotation rate sensor suffers changes with time. In this way it is assured that when a measured rotation rate needs to be corrected, a relatively recent offset is contained in the table.

In an embodiment, determining the rotation rate at vehicle rest involves reading out a plurality of rotation rate values from the rotation rate sensor and calculating an average over the plurality of rotation rate values. In this embodiment, additionally a measure of a fluctuation of the plurality of rotation rate values is calculated and stored associated with the respective temperature. This measure of the fluctuation can be considered an estimate of a statistical error of the determined rotation rate. The measure of the fluctuation can for example be a number of standard deviations of the plurality of rotation rate values, e.g., one, two, or three standard deviations; the measure of fluctuations can for example also be the maximum deviation of a value of the plurality of rotation rate values from the average of the plurality of rotation rate values, i.e., from the determined rotation rate.

In an embodiment, along with an output of a corrected rotation rate an estimate of a total error of the corrected rotation rate is output, the total error including at least the measure of the fluctuation of the rotation rate values for the respective temperature; this measure of fluctuation represents a statistical error of the corrected rotation rate, due to the fluctuations of rotation rates at determining the offsets, i.e., due to a statistical error of the offsets.

In a variant of this embodiment, the total error includes an error due to a rate of change of temperature. The reason here is that while the offsets determined for various temperatures as described above can be used to correct the rotation rates obtained from the rotation rate sensor, this compensation may not be reliable if the temperature for the rotation rate sensor is not well defined. In particular, if the temperature of the rotation rate sensor, or an environment thereof, is changing, the rotation rate sensor may not be operating in a thermally settled state, leading to additional errors in the values of rotation rates provided by the sensor. An estimate of this error is included in the total error. One way to achieve this is to rely on a sensor data sheet provided by a manufacturer of the specific rotation rate sensor used, which data sheet gives estimates of this error in dependence on the rate of change of the temperature.

As has been described above, the table relating temperatures to offsets may be updated. Nonetheless it may occur that when an offset for a particular temperature is needed, the last update for the offset at this particular temperature has been some time ago; in the meantime, the offset may have changed. In order to account for this, the total error, in a further variant, includes an error due to the age of the offset used for correction of the rotation rate. One way to obtain this error is from a sensor data sheet provided by the manufacturer of the sensor, which states a drift rate of the rotation rate output from the sensor with sensor age or a maximum drift of the sensor over a specified lifetime of the sensor. In a simple example, a drift rate could be obtained as such a maximum drift divided by the specified lifetime. An estimate of the error due to the age of the offset used for correction may then be obtained as this drift rate multiplied with the time passed since this offset was calculated in an update of the table.

The total error, including one or more contributions as discussed above, may be such that the correct rotation rate of the vehicle is within the range specified by the total error about the corrected rotation rate with a specified probability, like 95% or 99%, without these percentages being a limitation of the invention.

It may occur that a measured rotation rate needs to be corrected and the temperature for the rotation rate sensor at which this rotation rate has been measured is not contained in the table. One approach is to choose the offset for that temperature in the table which is closest to the temperature at which this rotation rate was measured. Another approach is to calculate the offset for the temperature by interpolation of values contained in the table. The interpolation may for example be a linear interpolation or a cubic spline interpolation, without the invention being limited thereto.

As for the temperature and offset values stored in the table, the following further remarks are due: If, upon updating the table at vehicle rest, a temperature for the rotation rate sensor is determined which is not yet contained in the table, this temperature, along with the correspondingly determined offset, may be included in the table. The determined offset in case of first inclusion of a temperature-offset pair into the table for a temperature not previously contained in the table may be the determined rotation rate at vehicle rest at this temperature. This applies also in case the table is completely empty, e.g., for an entirely new vehicle or rotation rate sensor, or after a reset. The finite accuracy and resolution of the determination of the temperature, e.g., a temperature sensor used for this purpose will have a finite resolution and accuracy, may lead to a coarse graining of the temperature values stored in the table. Such a coarse graining may also be introduced by design of the table. For example, the table may only hold temperature values spaced apart by a minimal number of degrees, like one, two, or five degrees centigrade. Upon updating, the determined rotation rate may be used to update that entry of the table the corresponding temperature of which is closest to the temperature found at first at the update, i.e., one or an average of plural temperatures measured at or in the vicinity of the rotation rate sensor. The respective temperature contained in the table can be considered an effective temperature, and in this case, for purposes of updating, the temperature for the rotation rate sensor is this effective temperature. This approach may be refined by estimating the offset for the effective temperature, e.g., by linear approximation. A further refinement is that in addition to updating the entry of the table for the effective temperature, the table is also updated at a neighbouring entry, i.e., an entry corresponding to a further one of the temperatures held in the table, so that the temperature found at first for the rotation rate sensor is between the effective temperature and the temperature corresponding to the neighbouring entry. The corresponding offset for the neighbouring entry may be estimated, e.g., by linear approximation.

In an embodiment, when, for the purposes of an update of the table, the temperature for the rotation rate sensor is determined, a rate of change of the temperature for the rotation rate sensor is also determined. An update of the table is only performed if this rate of change is below a pre-defined threshold. The higher the rate of change of the temperature, the less thermally settled the rotation rate sensor is, and the more unreliable its rotation rate output becomes. By limiting updates of the table to situations when the rate of change of the temperature is below a pre-defined threshold, it is assured that the data in the table remain reliable to an accepted degree over the course of updates. In cases as discussed above, where the temperature for the rotation rate sensor is an effective temperature, here the rate of change of the temperature before conversion to the effective temperature should be considered, i.e., one or more temperatures measured at or in the vicinity of the rotation rate sensor.

Generally, the method according to the invention may be performed by a data processing unit on board of the vehicle in cooperation with the rotation rate sensor. The rotation rate sensor may be implemented in an Inertial Measurement Unit. The table holding temperature and offset values and the further values to be stored according to the method may be stored in the data processing unit in one or plural known and suitable data structures.

The system according to the invention includes a data processing unit and a rotation rate sensor and is configured to perform the method according to the invention, as described above. The vehicle according to the invention includes an aforementioned system according to the invention.

Below, the invention and its advantages will be described with reference to the accompanying figures.
- Figure 1: illustrates the dependence of the rotation rate offset on temperature.
- Figure 2: shows the principle of rotation rate compensation.
- Figure 3: shows three plots showing quantities in relation to temperature.
- Figure 4: shows an example of the updating of the temperature-offset table.
- Figure 5: shows an example of the rotation rate compensation.
- Figure 6: shows a vehicle according to the invention.

The figures serve to illustrate the invention and relate to embodiments of the invention in order to do so. The figures are not to be taken as a limitation of the invention to such embodiments.

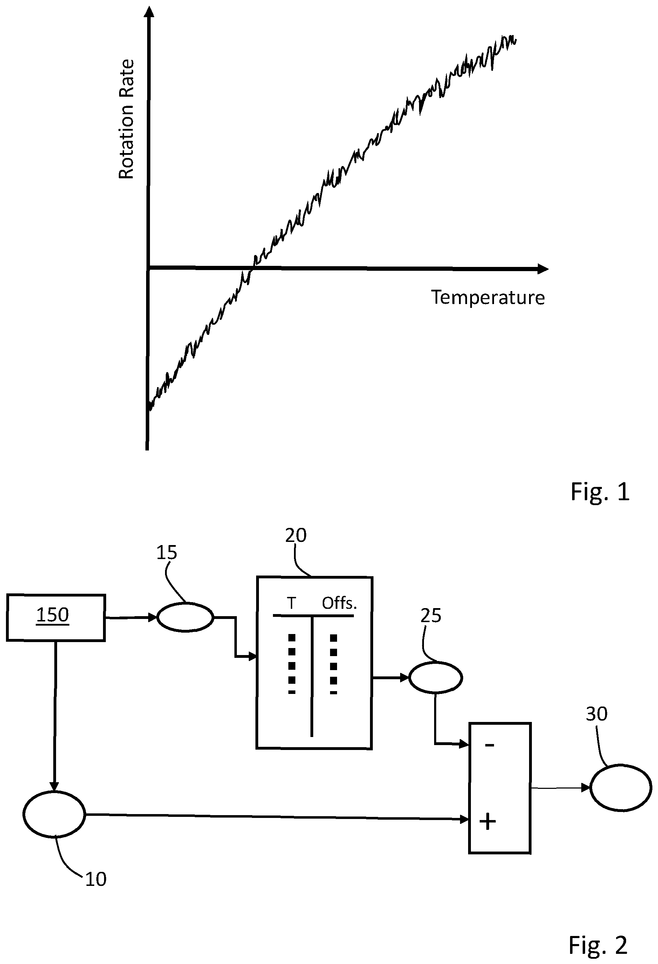

**Fig. 1** is an example of a graph showing rotation rate as determined with a rotation rate sensor on board of a vehicle at rest versus temperature. So, this graph shows a rotation rate offset in dependence on temperature. While this dependence will be different for different types or models of rotation rate sensors, one typical rotation rate sensor has the offset varying over a range of about 0.5 degrees/second in a temperature range from about -20 degrees centigrade to 100 degrees centigrade. Such a variation of the offset is too large to be neglected if reliable autonomous driving functions are to be achieved; it is in particular not sufficient to determine the offset once prior to a cruise with the vehicle still at rest, as temperature usually will vary during the cruise.

**Fig. 2** shows the principle of rotation rate compensation. With rotation rate sensor 150 a rotation rate 10 is measured. A temperature 15 for the rotation rate sensor 150 is determined. The temperature 15 is referred to a table 20 holding values of temperature associated with rotation rate offsets. This referral results in an offset 25 for the temperature 15. This offset 25 is subtracted from the measured rotation rate 10, resulting in a corrected rotation rate 30. If the temperature 15 is found in table 20, the associated offset is the resulting offset 25. If the temperature 15 is not found in table 20, the offset associated with the temperature in table 20 closest to temperature 15 may be the resulting offset 25. Another possibility is that the resulting offset 25 is found from interpolation of the temperature-offset pairs in table 20.

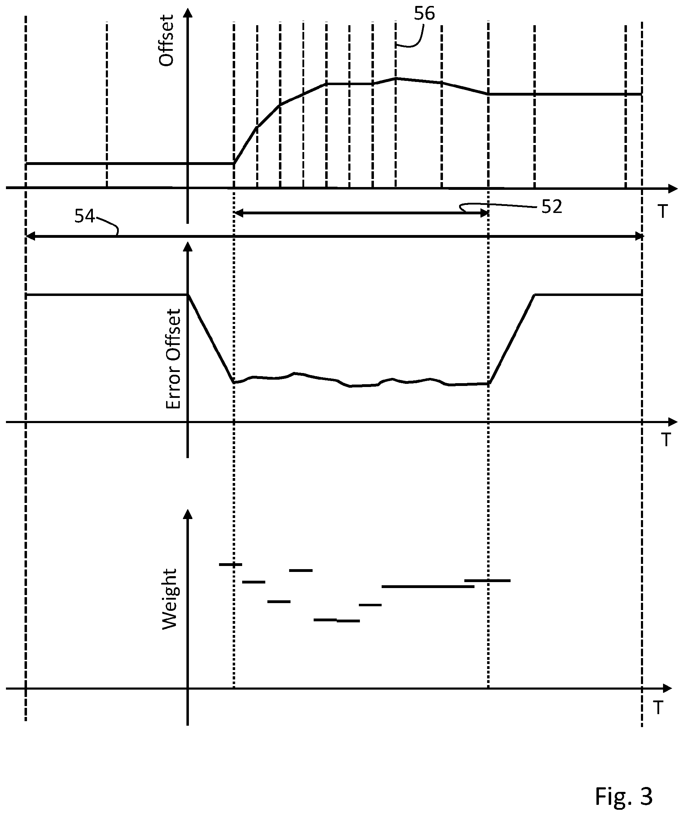

**Fig. 3** includes three plots sharing a common abscissa on which the temperature T for the rotation rate sensor is indicated. The top plot shows the offset stored in the table in dependence on temperature. The temperature values contained in the table are indicated by lines 56. The rotation rate sensor has a temperature range of operation 54, and in the example shown only offsets for temperatures in a smaller range 52 contained within the range of operation 54 have been determined and updated in the table. For temperatures in the range 54, but outside range 52, the offsets for the closest temperature in the range 52 are used. As can be seen, in this example the temperature values stored in the table are not spaced equidistantly.

The middle plot indicates the statistical error of the determined offset in the range 52. Outside the range 52 the maximum rotation rate error for the operating life of the rotation rate sensor is used as offset error. This maximum rotation rate error can for example be obtained from a data sheet for the specific rotation rate sensor, provided by a manufacturer of the rotation rate sensor.

The bottom plot shows the weight for the offsets stored in the table for the various temperatures. The weights shown apply to a given point in time, as the weights are decreased with increasing age of an offset, i.e., increasing time since the last update for the respective temperature. Upon update the offset always receives a pre-defined initial weight, expressed by a value of a counter. At fixed time intervals, e.g., every 10 seconds, the counter is decreased by one. Upon update, the new offset is calculated as a weighted average of the rotation rate determined at update and the offset already stored in the table for the respective temperature. The weight of the offset stored is the value the counter has reached upon update, the weight of the rotation rate determined upon update is equal to the pre-defined initial weight. The new offset starts out with the pre-defined initial weight.

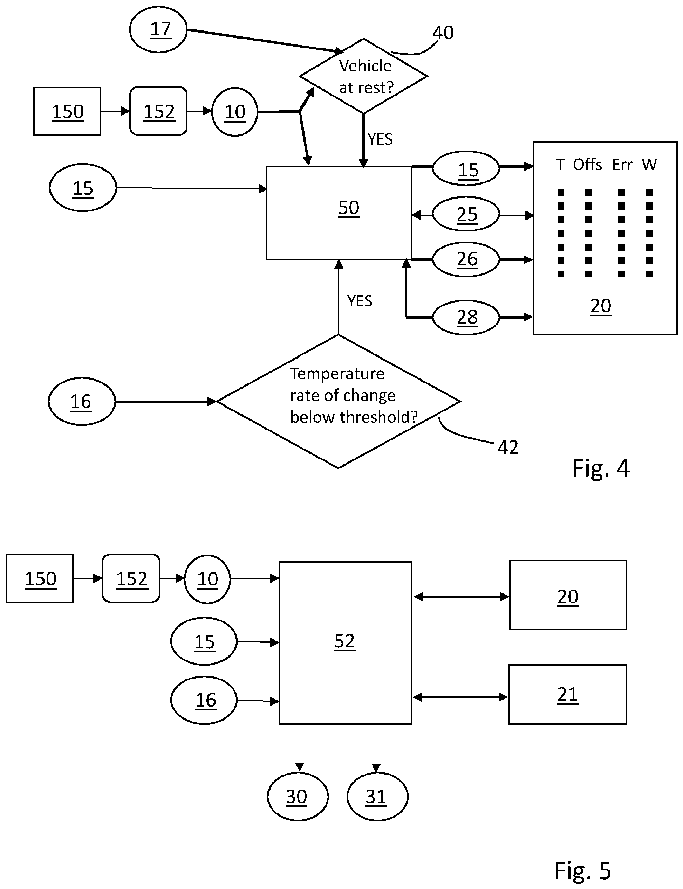

**Fig. 4** shows an example of the updating of the temperature-offset table 20. Vehicle bus data 17 and a rotation rate value 10 are provided to decision block 40 to determine whether the vehicle is at rest. The vehicle bus data 17 may for example include the locking state of the vehicle's steering wheel, the positions of throttle and brakes, the state of the gear, the on/off state of the vehicle's engine, speed and acceleration of the vehicle. The rotation rate 10 is obtained from the rotation rate sensor 150, and here is shown to be obtained after passing the raw output from the rotation rate sensor 150 through a low pass filter 152. If the vehicle is found not to be at rest, no update of table 20 is done. In decision block 42 it is determined whether a rate of change 16 over time of the temperature for the rotation rate sensor 150 is below a pre-defined threshold. If the rate of change 16 is above the threshold, no update of the table 20 is done, as the rotation rate 10 provided by the rotation rate sensor 150 may have too large an error. If the vehicle is determined to be at rest in decision block 40 and the rate of change 16 of the temperature is found to be below the threshold in decision block 42 then a computation 50 of various quantities is done. The computation 50 involves the rotation rate 10, the temperature 15 for the rotation rate sensor 150, the offset 25 currently stored in table 20 for the temperature 15, and the weight 28 currently stored in the table 20 for temperature 15. For the temperature 15 the computation produces an updated value of the offset 25 as weighted average of the rotation rate 10 and the offset 25 currently stored in the table 20, the weighted average requiring the weight 28. Also, the error 26 for the offset is determined; this error includes at least the statistical error. Temperature 15, updated value of the offset 25, determined error of the offset 26 and updated weight 28 are stored in the table 20. Determining the statistical error included in error 26 for an update requires that the rotation rate 10 is obtained from a plurality of rotation rate readings from rotation rate sensor 150 via low pass filter 152 as an average, and that additionally the variations of the values of the plurality of readings around this average are calculated, as has been discussed above. Also, as has been discussed above, too, if the temperature 15 determined for the rotation rate sensor 150 does not fit the coarse graining of the temperatures in table 20, a correspondingly adjusted temperature may be used instead.

**Fig. 5** shows an example of rotation rate compensation, as an implementation of the general principle discussed in the context of Fig. 2. A rotation rate 10 is measured by the rotation rate sensor 150 via a low pass filter 152. This measured rotation rate 10, a temperature 15 for the rotation rate sensor 150 and a rate of change 16 of the temperature for the rotation rate sensor 150 are provided to a compensation routine 52. Compensation routine 52 can access the data stored in table 20, i.e., temperatures, corresponding offsets, errors, and weights, as well as data 21 on the rotation rate sensor 150, which may originate from the manufacturer of the rotation rate sensor 150. From the data stored in table 20 compensation routine 52 obtains an offset to correct the measured rotation rate 10; the offset can be obtained by interpolation if the temperature 15 has a value between the temperature values contained in the table 20. This offset is subtracted from the measured rotation rate 10 to obtain the corrected rotation rate 30. From the data in table 20 the compensation routine 52 also obtains a statistical error for the rotation rate, which may also be obtained by interpolation if the temperature 15 has a value between the temperature values contained in the table 20. The statistical error is part of the total error 31. From data 21 the compensation routine 52 obtains an error of the measured rotation rate due to the rate of change 16 of the temperature. This error is added to the statistical error. A further contribution to the total error 31 arises, as mentioned above, from the fact that the latest update of the data in table 20 relevant for temperature 15 may have been some time ago. From data 21 a drift rate of the rotation rate sensor error with time is obtained, and from the time since the last update of the relevant data in table 20 the corresponding contribution to the total error 31 is derived. The time since the last update may either be inferred directly from the time of the measurement of rotation rate 10 to be corrected and the time of the last update, if such time is stored in the table 20, or it can be inferred from the weight stored in table 20, as the weight is reduced in a defined manner in dependence on time, starting from a defined value. From the compensation routine 52 a corrected rotation rate 30 and a total error 31 are output. The nature of the total error 31, based on the statistical error from table 20 and the errors due to rate of change of temperature and time since the last update, which are related to rotation rate sensor specifications, is such that the correct rotation rate deviates from the corrected rotation rate 30 at most by the total error 31 with a defined probability, like for instance 95% or 99%.

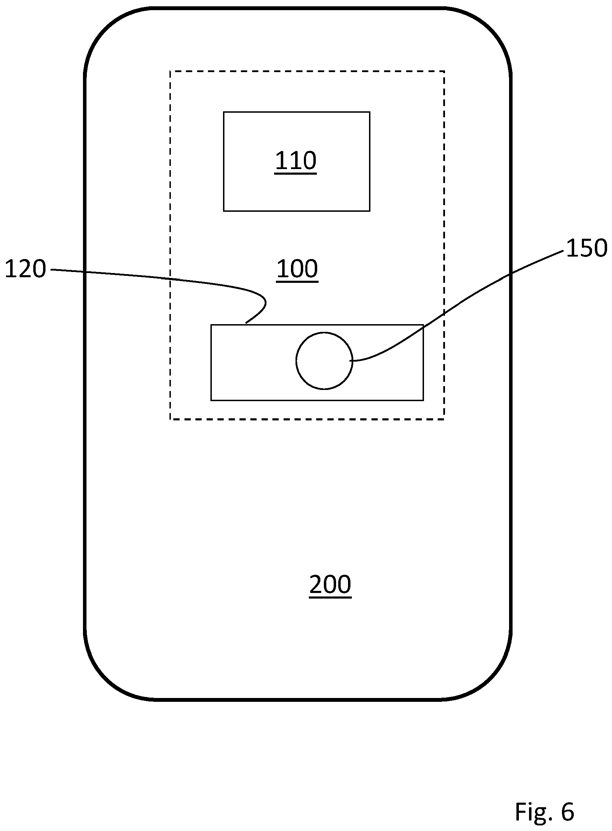

**Fig. 6** schematically shows a vehicle 200 according to the invention. The vehicle 200 includes a system 100 according to the invention. The system 100 includes a data processing unit 110 and an Inertial Measurement Unit 120, which in turn includes a rotation rate sensor 150. The system 100 is configured to perform the method according to the invention.

### List of Reference Signs:

- 10: rotation rate
- 15: temperature
- 16: rate of temperature change
- 17: vehicle bus data
- 20: table
- 21: sensor data
- 25: offset
- 26: offset error
- 28: weight
- 30: corrected rotation rate
- 31: total error
- 40: decision block
- 42: decision block
- 50: computation
- 52: compensation routine
- 100: system
- 110: data processing unit
- 120: Inertial Measurement Unit
- 150: rotation rate sensor
- 152: low pass filter
- 200: vehicle

## Claims

1. Method for offset compensation of a rotation rate sensor (150) on board of a vehicle (200), the method comprising:
measuring a rotation rate (10) of the vehicle (200) with the rotation rate sensor (150);
correcting the rotation rate (10) by subtracting an offset (25) from the measured rotation rate (10);
outputting the corrected rotation rate (30);
wherein
a temperature (15) is determined for the rotation rate sensor (150), and
the offset (25) is provided from a table (20) associating temperature values with offset values,
wherein the table is updated by performing the following steps:
determining if the vehicle (200) is at rest;
if it is determined that the vehicle (200) is at rest,
determining a temperature (15) for the rotation rate sensor (150),
determining a rotation rate (10) from the rotation rate sensor (150),
updating the table (20) with an offset (25) and the temperature (15), wherein in the updating of the table (20) a weight (28) for the updated offset (25) is stored, the offset (25) is calculated as a weighted average of the currently determined rotation rate (10) at vehicle rest and the previous offset (25) contained in the table (20) for the respective temperature (15), and the weight (28) of the updated offset (25) is decreased with increasing time after the update,
**characterized in that**
the weight upon update for the updated offset is a pre-defined initial weight, expressed by a value of a counter;
the counter is decreased by one at fixed time intervals;
the weight of the currently determined rotation rate (10) in the weighted average is equal to the pre-defined initial weight.

2. Method according to claim 1, wherein determining the rotation rate (10) involves reading out a plurality of rotation rate values from the rotation rate sensor (150) and calculating an average over the plurality of rotation rate values, and wherein additionally a measure of a fluctuation of the plurality of rotation rate values is calculated and stored associated with the respective temperature (15).

3. Method according to claim 2, wherein along with an output of a corrected rotation rate (30) a total error (31) of the corrected rotation rate (30) is output, the total error (31) including at least the measure of the fluctuation of the plurality of rotation rate values for the respective temperature (15).

4. Method according to claim 3, wherein the total error (31) includes an error due to a rate of temperature change (16) during measuring the rotation rate (10).

5. Method according to claim 3 or 4, wherein the total error (31) includes an error due to the age of the offset (25) used for correction of the rotation rate (10).

6. Method according to one of the claims 1 to 5, wherein an updating of the table (20) at vehicle rest is only performed if a rate of change of the temperature (16) for the rotation rate sensor (150) is below a pre-defined threshold.

7. Method according to one of the claims 1 to 6, wherein the table (20) is designed to hold specific temperature values only, and in the updating of the table (20) the temperature (15) for the rotation rate sensor (150) is an effective temperature equal to that one of the specific temperature values held in the table (20) closest to a measured temperature for the rotation rate sensor (150).

8. Method according to claim 7, wherein in addition to updating the table (20) for the effective temperature the table (20) is also updated for a neighbouring one of the specific temperature values held in the table (20) so that the measured temperature for the rotation rate sensor (150) is between the effective temperature and the neighbouring one of the specific temperature values held in the table (20).

9. Method according to one of the previous claims, wherein, if for the correcting of a rotation rate (10) an offset (25) is required for a temperature (15) not contained in the table (20), the offset (25) is calculated by interpolation of values contained in the table (20).

10. Method according to one of the previous claims, wherein the method is performed by a data processing unit (110) on board of the vehicle (200) in cooperation with the rotation rate sensor (150).

11. System (100) including a data processing unit (110) and a rotation rate sensor (150), the system (100) configured to perform the method according to one of the claims 1 to 10.

12. Vehicle (200) including a system (100) according to claim 11.

## Patentansprüche

1. Verfahren zur Versatzkompensation eines Drehratensensors (150) an Bord eines Fahrzeugs (200), wobei das Verfahren umfasst:
Messen einer Drehrate (10) des Fahrzeugs (200) mit dem Drehratensensor (150);
Korrigieren der Drehrate (10) durch Subtraktion eines Versatzes (25) von der gemessenen Drehrate (10);
Ausgeben der korrigierten Drehrate (30);
wobei
eine Temperatur (15) für den Drehratensensor (150) bestimmt wird, und
der Versatz (25) aus einer Tabelle (20) bereitgestellt wird, die Temperaturwerte mit Versatzwerten verknüpft,
wobei die Tabelle durch Ausführen der folgenden Schritte aktualisiert wird:
Feststellen, ob sich das Fahrzeug (200) im Stillstand befindet;
wenn festgestellt wird, dass sich das Fahrzeug (200) in Ruhe befindet,
Bestimmen einer Temperatur (15) für den Drehratensensor (150),
Bestimmen einer Drehrate (10) anhand des Drehratensensors (150),
Aktualisieren der Tabelle (20) mit einem Versatz (25) und der Temperatur (15), wobei bei der Aktualisierung der Tabelle (20) eine Gewichtung (28) für den aktualisierten Versatz (25) gespeichert wird, der Versatz (25) als ein gewichteter Mittelwert aus der aktuell ermittelten Drehrate (10) bei Fahrzeugstillstand und dem vorherigen, in der Tabelle (20) enthaltenen Versatz (25) für die jeweilige Temperatur (15) berechnet wird, und die Gewichtung (28) des aktualisierten Versatzes (25) mit zunehmender Zeit nach der Aktualisierung verringert wird,
**dadurch gekennzeichnet, dass**
die Gewichtung bei der Aktualisierung für den aktualisierten Versatz eine vordefinierte Anfangsgewichtung ist, ausgedrückt durch einen Wert eines Zählers;
der Zähler in festen Zeitabständen um eins verringert wird;
die Gewichtung der aktuell ermittelten Drehrate (10) im gewichteten Mittelwert gleich der vordefinierten Anfangsgewichtung ist.

2. Verfahren nach Anspruch 1, wobei zum Bestimmen der Drehrate (10) eine Vielzahl von Drehratenwerten aus dem Drehratensensor (150) ausgelesen und ein Mittelwert über die Vielzahl von Drehratenwerten berechnet wird, und wobei zusätzlich ein Maß für eine Schwankung der Vielzahl von Drehratenwerten berechnet und in Verbindung mit der jeweiligen Temperatur (15) gespeichert wird.

3. Verfahren nach Anspruch 2, wobei zusammen mit einer Ausgabe einer korrigierten Drehrate (30) ein Gesamtfehler (31) der korrigierten Drehrate (30) ausgegeben wird, wobei der Gesamtfehler (31) zumindest das Maß der Schwankung der Vielzahl von Drehratenwerten für die jeweilige Temperatur (15) umfasst.

4. Verfahren nach Anspruch 3, wobei der Gesamtfehler (31) einen Fehler aufgrund einer Temperaturänderungsrate (16) während der Messung der Drehrate (10) umfasst.

5. Verfahren nach Anspruch 3 oder 4, wobei der Gesamtfehler (31) einen Fehler aufgrund des Alters des zur Korrektur der Drehrate (10) verwendeten Versatzes (25) umfasst.

6. Verfahren nach einem der Ansprüche 1 bis 5, wobei eine Aktualisierung der Tabelle (20) bei Fahrzeugstillstand nur dann durchgeführt wird, wenn eine Temperaturänderungsrate (16) für den Drehratensensor (150) unter einem vorgegebenen Schwellenwert liegt.

7. Verfahren nach einem der Ansprüche 1 bis 6, wobei die Tabelle (20) nur zur Aufnahme spezifischer Temperaturwerte ausgelegt ist und bei der Aktualisierung der Tabelle (20) die Temperatur (15) für den Drehratensensor (150) eine effektive Temperatur ist, die gleich demjenigen der in der Tabelle (20) aufgenommenen spezifischen Temperaturwerte ist, der einer gemessenen Temperatur für den Drehratensensor (150) am nächsten kommt.

8. Verfahren nach Anspruch 7, wobei zusätzlich zur Aktualisierung der Tabelle (20) für die effektive Temperatur die Tabelle (20) auch für einen benachbarten der in der Tabelle (20) gehaltenen spezifischen Temperaturwerte aktualisiert wird, so dass die gemessene Temperatur für den Drehratensensor (150) zwischen der effektiven Temperatur und dem benachbarten der in der Tabelle (20) gehaltenen spezifischen Temperaturwerte liegt.

9. Verfahren nach einem der vorhergehenden Ansprüche, wobei, wenn zum Korrigieren einer Drehrate (10) ein Versatz (25) für eine nicht in der Tabelle (20) enthaltene Temperatur (15) erforderlich ist, der Versatz (25) durch Interpolation von in der Tabelle (20) enthaltenen Werten berechnet wird.

10. Verfahren nach einem der vorhergehenden Ansprüche, wobei das Verfahren von einer Datenverarbeitungseinheit (110) an Bord des Fahrzeugs (200) in Kooperation mit dem Drehratensensor (150) durchgeführt wird.

11. System (100) mit einer Datenverarbeitungseinheit (110) und einem Drehratensensor (150), wobei das System (100) zur Durchführung des Verfahrens nach einem der Ansprüche 1 bis 10 konfiguriert ist.

12. Fahrzeug (200) mit einem System (100) nach Anspruch 11.

## Revendications

1. Procédé de compensation de décalage d'un capteur de vitesse de rotation (150) à bord d'un véhicule (200), le procédé comprenant :
mesurer un taux de rotation (10) du véhicule (200) à l'aide du capteur de vitesse de rotation (150) ;
corriger le taux de rotation (10) en soustrayant un décalage (25) du taux de rotation mesuré (10) ;
sortir le taux de rotation corrigé (30) ;
dans lequel
une température (15) est déterminée pour le capteur de vitesse de rotation (150), et
le décalage (25) est fourni par un tableau (20) associant des valeurs de température à des valeurs de décalage,
le tableau est mis à jour en effectuant les étapes suivantes :
déterminer si le véhicule (200) est au repos ;
s'il est déterminé que le véhicule (200) est au repos,
déterminer une température (15) pour le capteur de vitesse de rotation (150),
déterminer un taux de rotation (10) à partir du capteur de vitesse de rotation (150),
mettre à jour du tableau (20) avec un décalage (25) et la température (15), dans lequel, lors de la mise à jour du tableau (20), une pondération (28) pour le décalage (25) mis à jour est stocké, le décalage (25) est calculé comme une moyenne pondérée du taux de rotation (10) actuellement déterminé au repos du véhicule et du décalage (25) précédent contenu dans le tableau (20) pour la température (15) respective, et la pondération (28) du décalage (25) mis à jour diminue avec l'augmentation du temps après la mise à jour,
**caractérisé par le fait que**
la pondération lors de la mise à jour pour le décalage mis à jour est une pondération initiale prédéfinie, exprimée par une valeur d'un compteur ;
le compteur est décrémenté d'une unité à intervalles de temps fixes ;
la pondération du taux de rotation (10) actuellement déterminé dans la moyenne pondérée est égale à la pondération initiale prédéfinie.

2. Procédé selon la revendication 1, dans lequel la détermination du taux de rotation (10) implique la lecture d'une pluralité de valeurs de taux de rotation à partir du capteur de vitesse de rotation (150) et le calcul d'une moyenne sur la pluralité de valeurs de taux de rotation, et dans lequel, en outre, une mesure d'une fluctuation de la pluralité de valeurs de taux de rotation est calculée et stockée en association avec la température (15) respective.

3. Procédé selon la revendication 2, dans lequel, parallèlement à une sortie d'un taux de rotation corrigé (30), une erreur totale (31) du taux de rotation corrigé (30) est émise, l'erreur totale (31) comprenant au moins la mesure de la fluctuation de la pluralité de valeurs de taux de rotation pour la température (15) respective.

4. Procédé selon la revendication 3, dans lequel l'erreur totale (31) comprend une erreur due à un taux de changement de température (16) pendant la mesure du taux de rotation (10).

5. Procédé selon la revendication 3 ou 4, dans lequel l'erreur totale (31) comprend une erreur due à l'âge du décalage (25) utilisé pour la correction du taux de rotation (10).

6. Procédé selon l'une des revendications 1 à 5, dans lequel une mise à jour du tableau (20) au repos du véhicule n'est effectuée que si un taux de changement de la température (16) pour le capteur de vitesse de rotation (150) est inférieur à un seuil prédéfini.

7. Procédé selon l'une des revendications 1 à 6, dans lequel le tableau (20) est conçu pour contenir uniquement des valeurs de température spécifiques et, lors de la mise à jour du tableau (20), la température (15) pour le capteur de vitesse de rotation (150) est une température effective égale à celle des valeurs de température spécifiques contenues dans le tableau (20) qui est la plus proche d'une température mesurée pour le capteur de vitesse de rotation (150).

8. Procédé selon la revendication 7, dans lequel, outre la mise à jour du tableau (20) pour la température effective, le tableau (20) est également mis à jour pour une valeur voisine des valeurs de température spécifiques contenues dans le tableau (20), de sorte que la température mesurée pour le capteur de vitesse de rotation (150) se situe entre la température effective et la valeur voisine des valeurs de température spécifiques contenues dans le tableau (20).

9. Procédé selon l'une des revendications précédentes, dans lequel, si pour la correction d'un taux de rotation (10) un décalage (25) est nécessaire pour une température (15) non contenue dans le tableau (20), le décalage (25) est calculé par interpolation de valeurs contenues dans le tableau (20).

10. Procédé selon l'une des revendications précédentes, dans lequel le procédé est exécuté par une unité de traitement des données (110) à bord du véhicule (200) en coopération avec le capteur de vitesse de rotation (150).

11. Système (100) comprenant une unité de traitement de données (110) et un capteur de vitesse de rotation (150), le système (100) étant configuré pour exécuter le procédé selon l'une des revendications 1 à 10.

12. Véhicule (200) comprenant un système (100) selon la revendication 11.
